Europäisches Patentamt

European Patent Office

Office européen des brevets

(11) Veröffentlichungsnummer: **0 326 035**
**A2**

(12) # EUROPÄISCHE PATENTANMELDUNG

(21) Anmeldenummer: **89100985.4**

(22) Anmeldetag: **20.01.89**

(51) Int. Cl.4: **A45F 3/02 , A45C 13/00**

(30) Priorität: **25.01.88 DE 8800837 U**

(43) Veröffentlichungstag der Anmeldung:
**02.08.89 Patentblatt 89/31**

(84) Benannte Vertragsstaaten:
**AT CH DE ES FR IT LI NL**

(71) Anmelder: **Rox-Lederwarenfabriken Hamann GmbH**
**Hagenheimer Strasse Postfach**
**D-8911 Hofstetten(DE)**

(72) Erfinder: **Hamann, Klaus**
**Hagenheimer Strasse**
**D-8911 Hofstetten(DE)**
Erfinder: **Hamann, Jürgen**
**Hagenheimer Strasse**
**D-8911 Hofstetten(DE)**

(74) Vertreter: **Fincke, Karl Theodor, Dipl.-Phys.Dr. et al**
**Patentanwälte Dipl.-Ing. H.Weickmann**
**Dipl.-Phys.Dr. K.Fincke Dipl.-Ing.**
**F.A.Weickmann Dipl.-Chem. B. Huber Dr. Ing.**
**H. Liska Dipl.-Phys.Dr. J. Prechtel**
**Möhlstrasse 22**
**D-8000 München 80(DE)**

(54) **An einem Schultertragriemen zu tragender Gerätekasten.**

(57) An einem Schultertragriemen zu tragender Gerätekasten, der eine Außenwand, zwei Seitenwände und eine zum Körper eines Trägers weisende Innenwand aufweist, über die ein angelenkter Deckel hochzuklappen ist, dadurch gekennzeichnet, daß der Deckel an den Seitenwänden mittels Lenkern angelenkt ist, die beim Schwenken des Deckels auf die Außenseite der Außenwand über den oberen Rand der Außenwand ragen.

Fig.1

## An einem Schultertragriemen zu tragender Gerätekasten

Die Erfindung betrifft einen an einem Schultertragriemen zu tragenden Gerätekasten nach dem Oberbegriff des Anspruchs 1.

Bei bekannten Gerätekästen dieser Art war es allein möglich, den Deckel zum Körper des Trägers hochzuklappen, was zur Folge hatte, daß der Deckel dazu neigte, herunterzuklappen und den Griff in den Gerätekasten zu behindern, wenn der Deckel nicht in hochgeklappter Stellung besonders gesichert wurde.

Aufgabe der Erfindung ist es, eine Konstruktion anzugeben, mit der ein unbehinderter Griff in den Kasten durch den Träger möglich ist.

Die Lösung dieser Aufgabe ist in Anspruch 1 angegeben.

Um keine besonderen Maßnahmen zur Abstützung der Lenker bei auf der Außenseite der Außenwand des Gerätekastens geschwenktem Deckel treffen zu müssen, ist bevorzugt eine Ausbildung gemäß Anspruch 2 vorgesehen.

Ein Hochklappen des Deckels zum Träger hin führt besonders dann zu keiner störenden Lage des Deckels, wenn eine Ausbildung gemäß Anspruch 3 vorgesehen ist. Durch diese Ausbildung kann dann nämlich die Oberseite des hochgeklappten Deckels wenigstens annähernd in Flucht mit der Außenseite der Innenwand des Gerätekastens gebracht werden.

Werden die Lenker so angelenkt, wie in Anspruch 4 angegeben, stören sie nicht bei zugeklapptem Deckel.

Um eine Beschädigung der Außenwand des Gerätekastens zu vermeiden, ist bevorzugt eine Ausbildung nach Anspruch 5 vorgesehen.

Der Gerätekasten hat eine Vielzahl von Anwendungsmöglichkeiten. Es können in ihm beispielsweise untergebracht werden: eine Kamera oder Kamerateile, Akkumulatoren, Meßgeräte, Fotoartikel, ein Videogerät oder Videogeräteteile, ein Steuergerät oder Steuergeräteteile, ein Landvermessungsgerät oder dessen Teile, allgemein optische, feinmechanische, elektronische Geräte oder deren Teile.

Die Erfindung wird im folgenden an einem Ausführungsbeispiel unter Hinweis auf die beigefügten Zeichnungen erläutert.

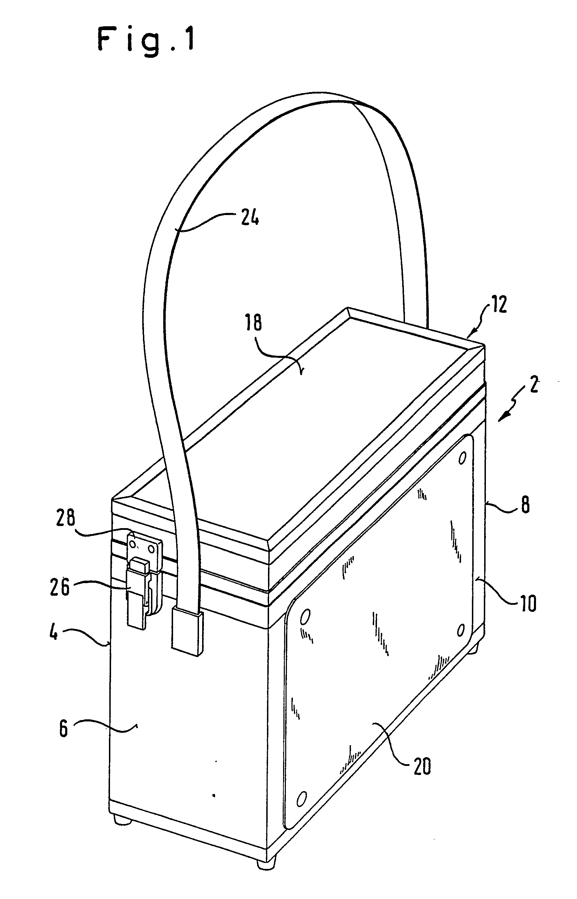

Fig. 1 zeigt einen Gerätekasten in Schrägansicht.

Fig. 2 zeigt den Gerätekasten nach Fig. 1 in Seitenansicht mit hochgeklapptem Deckel.

Fig. 3 zeigt den Gerätekasten nach Fig. 1 mit auf die Außenseite der Außenwand geklapptem Deckel.

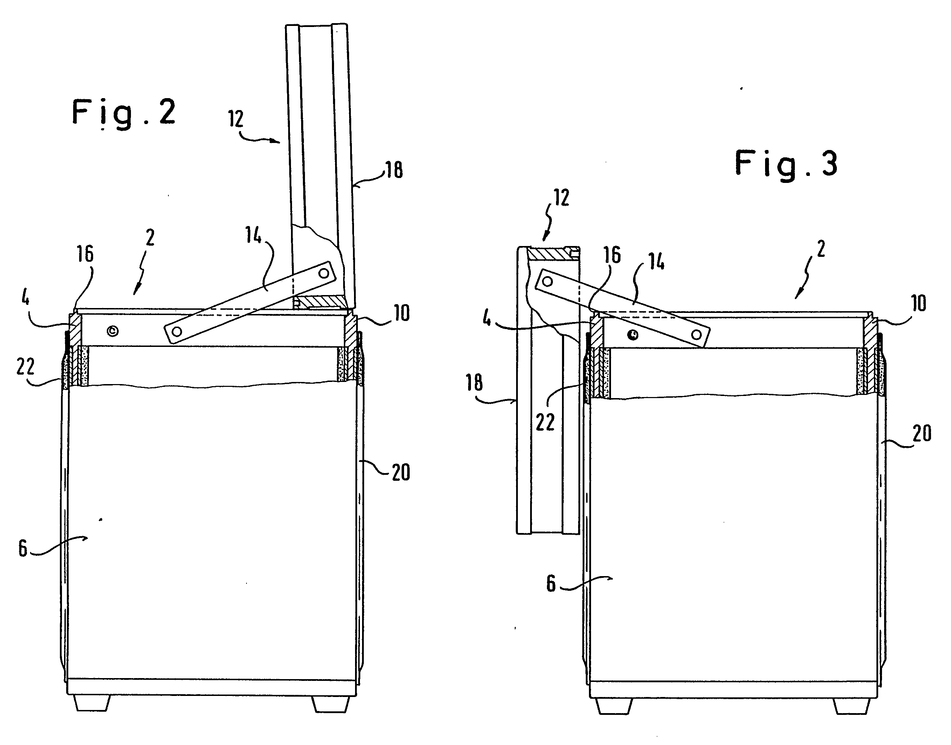

Ein Gerätekasten 2, der eine Außenwand 4, zwei Seitenwände 6, 8 und eine zum Körper eines Trägers weisende Innenwand 10 aufweist, ist mit einem Deckel 12 versehen, der an ihm angelenkt ist und zum Körper des Trägers, wie aus Fig. 2 ersichtlich, hochzuklappen ist. Hierzu ist der Deckel 12 an den Seitenwänden 6, 8 mittels Lenkern 14 angelenkt, die ein Schwenken des Deckels 12 auf die Außenseite der Außenwand 4 ermöglichen und dabei dann über den oberen Rand 16 der Außenwand 4 ragen, wie dies Fig. 3 zeigt. In diesem Zustand stützen sich die Lenker 14 am oberen Rand 16 der Außenwand 4 ab.

Da die Lenker 14 näher an der Außenwand 4 als an der Innenwand 10 angelenkt sind, haben sie in der Schließstellung des Deckels 12 im Innenraum des Gerätekastens 2 Platz, wobei sie etwas waagrecht liegen, und bewirken überdies bei zum Körper des Trägers hochgeklapptem Deckel 12, wie aus Fig. 2 ersichtlich, daß die Oberseite 18 des Deckels 12 etwa in Flucht zur Außenseite der Innenwand 10 verläuft.

Die Lenker 14 sind an den Innenseiten der Seitenwände 6, 8 angelenkt, so daß sie im Schließzustand des Deckels 12 nicht sichtbar sind.

Nicht nur auf der Außenseite der Innenwand 10 befindet sich ein Polster 20, sondern auch ein in den Zeichnungen ähnlich dargestelltes Polster 22 auf der Außenseite der Außenwand 4. Dieses Polster 22 bezweckt allein, den Deckel in Abstand von der Außenseite der Außenwand 4 zu halten, kann also diesem Zweck entsprechend dem Deckel 12 angepaßt ausgebildet und angeordnet sein.

In dem dargestellten Beispiel sind an den Außenseiten der Seitenwände 6, 8 die Enden eines Tragriemens 24 angebracht. Außerdem befinden sich an den Außenseiten der Seitenwände 6, 8 in der Nähe der Außenwand 4 Schlösser 26, die an Beschlagteilen 28 des Deckels 12 zum Verschließen des Gerätekastens angreifen können.

## Ansprüche

1. An einem Schultertragriemen (24) zu tragender Gerätekasten (2), der eine Außenwand (4), zwei Seitenwände (6, 8) und eine zum Körper eines Trägers weisende Innenwand (10) aufweist, über die ein angelenkter Deckel (12) hochzuklappen ist, **dadurch gekennzeichnet,** daß der Deckel (12) an den Seitenwänden (6, 8) mittels Lenkern (14) angelenkt ist, die beim Schwenken des Deckels (12) auf die Außenseite der Außenwand (4) über den oberen Rand (16) der Außenwand (4) ragen.

2. Gerätekasten nach Anspruch 1, dadurch gekennzeichnet, daß sich die Lenker (14) beim Schwenken des Deckels (12) auf die Außenseite der Außenwand (4) am oberen Rand (16) der Außenwand (4) abstützen.

3. Gerätekasten nach Anspruch 1 oder 2, dadurch gekennzeichnet, daß die Lenker (14) näher an der Außenwand (4) als an der Innenwand (10) an den Seitenwänden (6, 8) angelenkt sind.

4. Gerätekasten nach einem der vorstehenden Ansprüche, dadurch gekennzeichnet, daß die Lenker (4) an den Innenseiten der Seitenwände (6, 8) angelenkt sind.

5. Gerätekasten nach einem der vorstehenden Ansprüche, dadurch gekennzeichnet, daß sich auf der Außenseite der Außenwand (4) ein Auffangpolster (22) für den Deckel (12) befindet.

# Fig.1

Fig.2

12

18

2

16

14

4

22

10

20

6

Fig.3

12

16

14

2

4

18

22

10

20

6

EP 0 326 035 A2